Europäisches Patentamt

European Patent Office

Office européen des brevets

(19)

(11) Veröffentlichungsnummer : **0 367 136 B1**

(12) **EUROPÄISCHE PATENTSCHRIFT**

(45) Veröffentlichungstag der Patentschrift :
**04.11.92 Patentblatt 92/45**

(51) Int. Cl.$^5$ : **F16L 37/12,** F16L 37/10,
F16L 37/08

(21) Anmeldenummer : **89119984.6**

(22) Anmeldetag : **27.10.89**

(54) **Schlauchkupplung.**

(30) Priorität : **29.10.88 DE 3836938
27.05.89 DE 3917305**

(43) Veröffentlichungstag der Anmeldung :
**09.05.90 Patentblatt 90/19**

(45) Bekanntmachung des Hinweises auf die
Patenterteilung :
**04.11.92 Patentblatt 92/45**

(84) Benannte Vertragsstaaten :
**AT BE CH DE ES FR GB GR IT LI LU NL SE**

(56) Entgegenhaltungen :
**EP-A- 334 717
DE-A- 3 710 853
DE-U- 7 936 592**

(73) Patentinhaber : **PHOENIX
AKTIENGESELLSCHAFT
Hannoversche Strasse 88
W-2100 Hamburg 90 (DE)**

(72) Erfinder : **Brockmann, Hermann
Brumhagen 10
W-2110 Buchholz (DE)**
Erfinder : **Horch, Frank, Dipl.-Ing.
Delmer Bogen 29
W-2150 Buxtehude (DE)**
Erfinder : **Marzahn, Hans-Peter
Am Berg 6
W-2155 Neu-Wulmstorf (DE)**
Erfinder : **Banduch, Frank, Dipl.-Ing.
Bielfeldstrasse 23
W-2000 Hamburg 50 (DE)**

EP 0 367 136 B1

**Beschreibung**

Die Erfindung betrifft eine Schlauchkupplung gemäß Oberbegriff des Anspruchs 1.

Die erfindungsgemäße Schlauchkupplung als Weiterentwicklung der bisher bekannten Kupplungssysteme (DE-U-7936 592, DE-A-2444 245 und EP-A-0334 717, veröffentlicht 27.09.89, Stand der Technik gemäß Art. 54,3 EPÜ) zeichnet sich durch einen einfachen und damit auch kostengünstigen Aufbau aus. Außerdem ist mit der Kupplung gemäß Kennzeichen des Anspruchs 1 eine robotergerechte Montage möglich, was deshalb von Bedeutung ist, da Schlauchkupplungen insbesondere an Kfz-Aggregatestutzen (Zylinderkopf, Wasserpumpe, Kühler etc.) angeschlossen werden. Ferner ist die weiterentwickelte Kupplung leicht lösbar.

Die Erfindung wird im folgenden anhand von zwei Ausführungsbeispielen (I, II) unter Bezugnahme auf schematische Zeichnungen näher erläutert.

Es zeigen:

Fig. 1 die Schlauchkupplung als Axialschnitt (Beispiel I);

Fig. 2 den Grundkörper und den Drehring in Achsrichtung gesehen (Beispiel I);

Fig. 3 den Grundkörper der Schlauchkupplung (Beispiel II);

Fig. 4 die Axialerhebung längs der Schnittlinie A-A (Fig. 3);

Fig. 5 den Drehring in Achsrichtung gesehen (Beispiel II);

Fig. 6 den Drehring längs der Schnittlinie A-A (Fig. 5);

Fig. 7 den Drehring längs der Schnittlinie D-D (Fig. 5);

Fig. 8 den Drehring längs der Schnittlinie B-B (Fig. 5);

Fig. 9 den Drehring längs der Schnittlinie C-C (Fig. 5);

Fig. 10 den Grundkörper mit Drehring als Axialschnitt (Beispiel II);

Fig. 11 die Drehringfunktion (Beispiel II).

Beispiel I

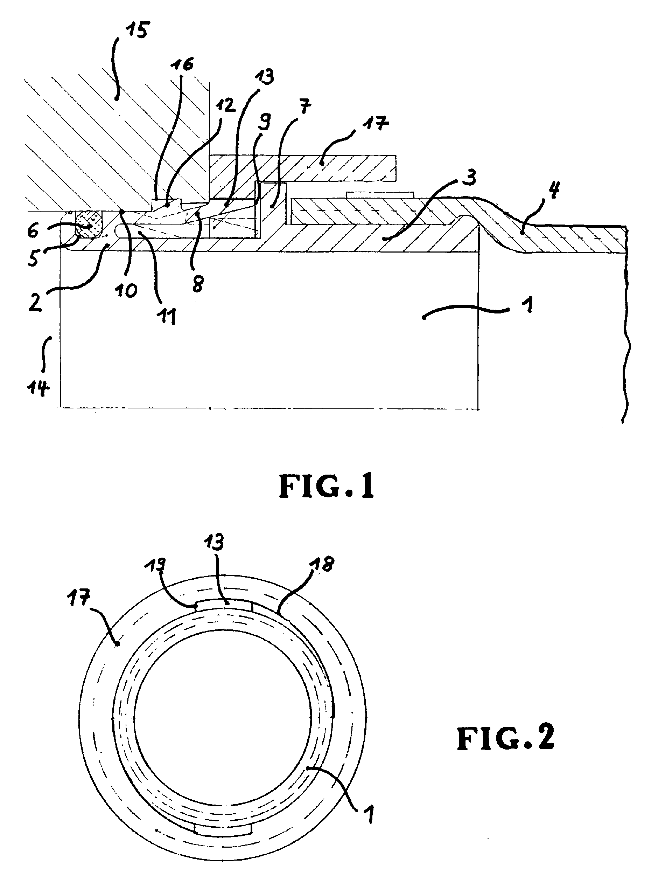

Fig. 1 zeigt den hülsenförmigen Grundkörper (1) der Schlauchkupplung mit Kupplungsteil (2) und Anschlußteil (3) für den Schlauch (4), wobei der Grundkörper aus Polyamid 6.6 GF 30 gefertigt wird. In seinem vorderen Bereich weist der Kupplungsteil eine umlaufende Nut (5) für den Dichtungsring (6) aus elastomerem Werkstoff aus. Zwischen dieser Nut und dem Anschlag (7) befindet sich der elastisch verformbare Federarm (8), der einstückig mit dem Grundkörper (1) verbunden ist, wobei das freie Ende (9) des Federarms in Richtung des Anschlages (7) zeigt. Der Federarm selbst geht höhengleich (d.h. ohne Abstufung) in die Oberfläche (10) des Kupplungsteiles (2) über, wobei sich unter dem Federarm eine Vertiefung (Federarmnut 11) befindet. Der Federarm ist mit zwei Rippen (12, 13) versehen, die nach außen gerichtet sind. Die Verriegelung erfolgt nun durch Einschieben des Kupplungsteiles (2) in die Stecknut (14) des Aggregatestutzens (15), wobei die erste Rippe (12) in der Hinterschneidung (16) des Stutzens einrastet. Die Funktion des Drehringes (17) wird nun in Verbindung mit der Fig. 2 erläutert.

Fig. 2 zeigt den Grundkörper (1) mit der zweiten Rippe (13) des Federarms und den Drehring (17), der eine Rampe (18) aufweist, die den Innendurchmesser des Drehringes verändern kann. Der Drehring besteht aus dem gleichen Werkstoff wie der Grundkörper. Im verriegelten Zustand nimmt die Rippe (13) die in der Fig. 2 dargestellte Position ein, d.h. sie stößt am Rampenanschlag (19) an. Wird nun der Ring (17) gegen den Uhrzeigersinn gedreht, verengt sich mittels der Rampe (18) sein Innendurchmesser und drückt die Rippe (13) und somit auch den Federarm nach unten in die Nut (11) - Fig. 1 (gestrichelte Linienführung). Auf diese Weise kommt die Rippe (12) aus der Hinterschneidung (16) frei, und der Kupplungsteil (2) kann aus dem Aggregatestutzen (15) entnommen werden.

Der Drehring (17) ist hier für eine Schlauchkupplung konzipiert, dessen Kupplungsteil (2) zwei Federarme gemäß Ansprüche 3 und 4 aufweist. Das Funktionsprinzip gilt jedoch für jede n-armige (n ≧ 1) Kupplung.

Beispiel II

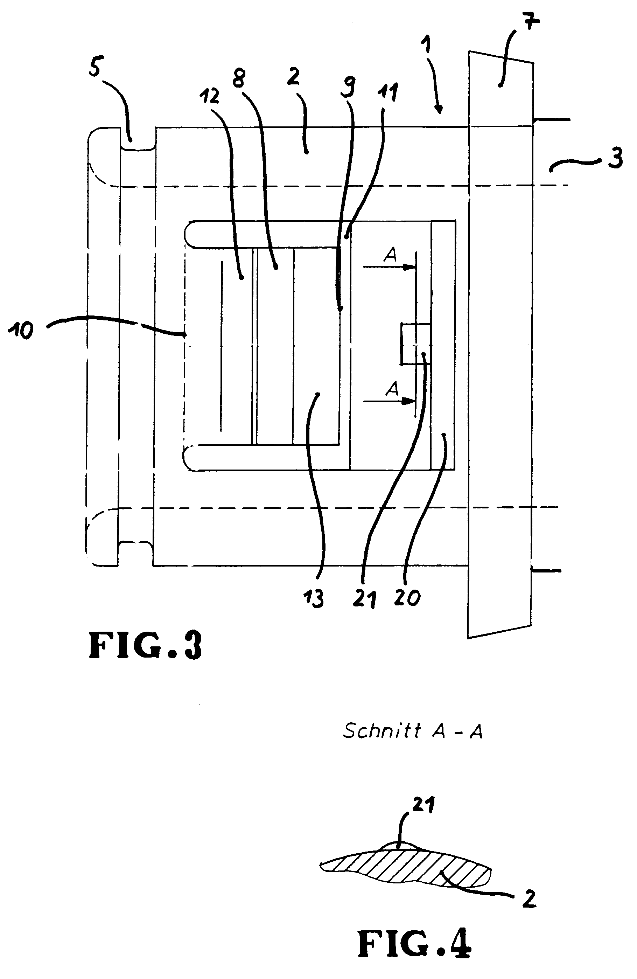

Fig. 3 zeigt den Grundkörper (1) der Schlauchkupplung mit den bekannten Teilen (2, 3, 5, 7 bis 13) gemäß Fig. 1. Zwischen dem freien Ende (9) des Federarms (8) befindet sich bei diesem Grundkörper zusätzlich eine Radialerhebung (20), die über die gesamte Breite der Federarmnut (11) geht und von der mittig im rechten Winkel in Richtung des Federarmendes (9) eine Axialerhebung (21) - siehe auch Fig. 4 - verläuft.

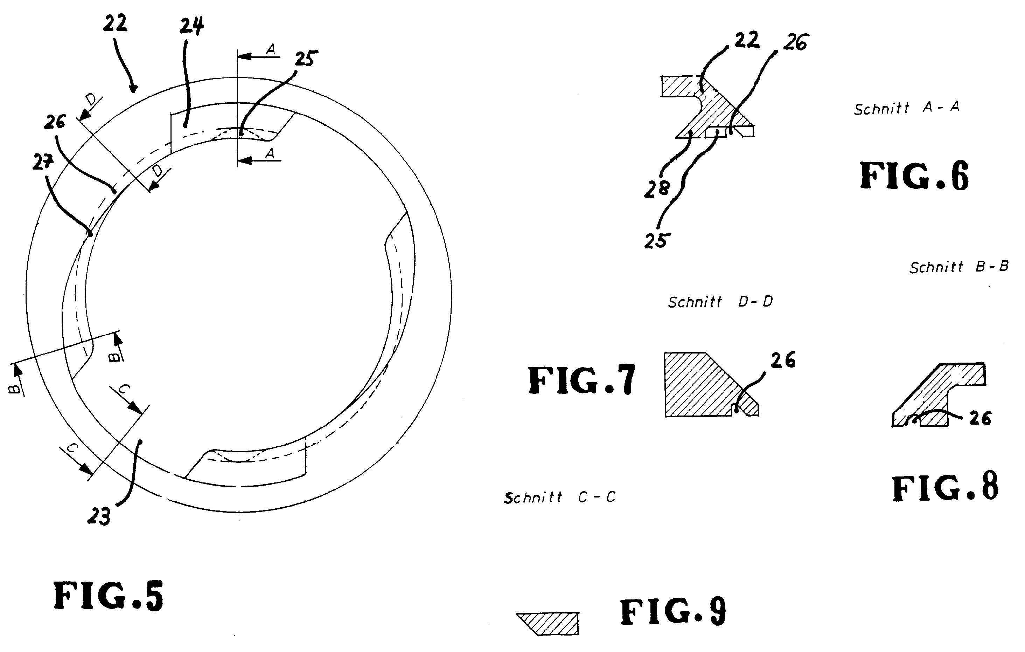

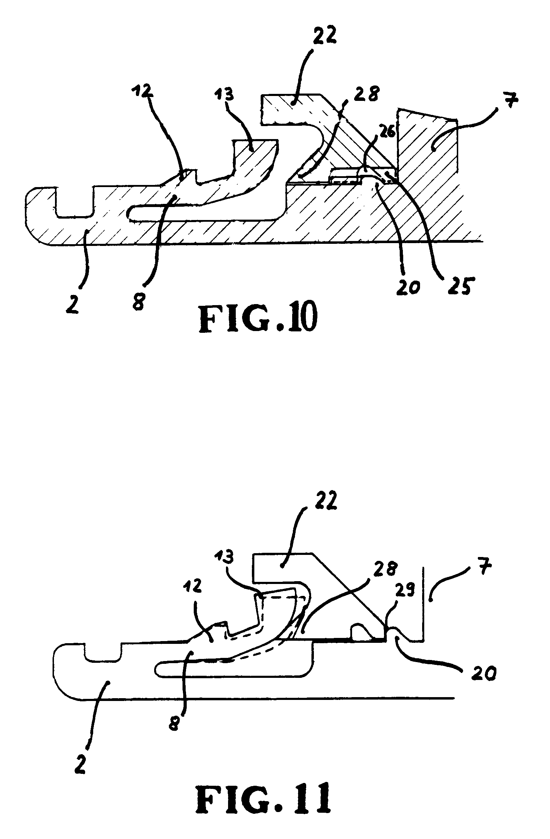

Prinzipiell funktioniert die Verriegelung wie bei dem Beispiel I automatisch durch Einschieben des Kupplungsteiles (2) in den Stutzen (15) - Fig. 1. Um den Federarm (8) in seiner Funktion, eine formschlüssige Verbindung zwischen Stutzen und Kupplungsteil herzustellen, zu unterstützen, greift die Zunge (28) des Drehringes (22) - Fig. 6 - unter den Federarm (8) - Fig. 11 - und fixiert den Federarm in seiner Lage. Diese zusätzliche Verriegelung geschieht aus zwei unterschiedlichen Situationen heraus, nämlich

1) bei der Erstmontage durch den Industrieroboter sowie

2) bei der Neuverriegelung nach Reparatur des Aggregates.

Im ersten Fall wird bei der Vormontage durch den Zulieferer der Drehring (22) mit seinem größten Innendurchmesser innerhalb der Nut (23) - Fig. 5 - über den Federarm (8) hinweg gestülpt, u.z. bis zum Anschlag (7) - Fig. 10. Anschließend wird der Drehring im Uhrzeigersinn gedreht (ca. 45°), bis dieser fühlbar einrastet. In dieser Position befindet sich die Rippe (13) des Federarmes (8) in der Aussparung (24) des Drehringes - Fig. 5. In dieser Drehringposition kann die Kupplung vom Industrieroboter gegriffen und in den Aggregatestutzen eingeführt werden. In Verbindung mit den Fig. 3 und 4 erkennt man die Axialerhebung (21), in welche der Drehring (22) mit seiner Axialnut (25) - Fig. 5, 6 und 10 - einrastet. Die Radialerhebung (20) - Fig. 3 - befindet sich nach der oben beschriebenen Montage des Drehringes in der Radialnut (26) desselben - Fig. 5 bis 8 und 10. Durch diese beiden Einrastungen ist der Ring auf dem Kupplungsteil (2) fixiert, so daß zur Montage der Drehring (22) vom Roboter gegriffen werden kann und die Fügekraft auf die Kupplung ausübt. Ist eine bestimmte Fügekraft erreicht "schnappt" der Ring über, sichert mit seiner unter den Federarm (8) fahrenden Zunge (28) den festen Sitz des Kupplungsteiles (2) im Stutzen und stützt sich mit seiner Außenkante (29) an der Radialerhebung (20) ab - Fig. 11.

Soll die Verbindung gelöst werden, wird der Ring (22) um ca. 45° gegen den Uhrzeigersinn bewegt, wobei sich die Zunge (28) unter dem Federarm (8) herausschiebt. Wird der Ring weiter gedreht, verengt sich mittels der Rampe (27) des Drehringes (22) - Fig. 5 - sein Innendurchmesser und drückt so die Rippe (13) nach unten, was zur Folge hat, daß sich der Federarm wieder verformt - Fig. 11 (gestrichelte Linienführung). Auf diese Weise kommt die Rippe (12) aus der Hinterschneidung (16) - Fig. 1 - frei, und der Kupplungsteil (2) kann aus dem Aggregatestutzen entnommen werden.

Bei einer manuellen Neuverriegelung wird vor dem Zusammenfügen der Drehring (22) so positioniert, daß sich sein größter Innendurchmesser über dem Federarm (8) befindet. Jetzt kann der Fügevorgang erfolgen. Nach dem Einrasten der Rippe (12) in die Hinterschneidung des Stutzens wird der Drehring um ca. 45° in Richtung des Uhrzeigersinns bewegt, so daß sich die Zunge (28) unter den Federarm der Kupplung schiebt, u.z. bei gleichzeitiger Abstützung der Außenkante (29) an der Radialerhebung (20). Die Kupplung ist erneut verriegelt.

**Patentansprüche**

1. Schlauchkupplung, insbesondere für Anschlüsse im Kfz-Bereich, bestehend aus
   - einem hülsenförmigen Grundkörper (1) mit Kupplungs- und Schlauchanschlußteil (2 bzw. 3), wobei der Kupplungsteil (2) in seinem vorderen Bereich eine umlaufende Nut (5) mit einsitzendem Dichtungsring (6) aus elastomerem Werkstoff, in seinem Zwischenbereich wenigstens einen elastisch verformbaren Federarm (8), der einstückig mit dem Grundkörper (1) verbunden ist, und in seinem Endbereich einen Anschlag (7) aufweist;
   - einem Zusatzteil, der den Kupplungsteil (2) im Bereich des Federarmes (8) außenseitig radial umschließt; und
   - einem Aggregatestutzen (15) mit Stecknut (14) für den Kupplungsteil (2);
   dadurch gekennzeichnet, daß
   - das freie Ende (9) des Federarmes (8), der zwei nach außen gerichtete Rippen (12, 13) besitzt, und höhengleich ohne Abstufung in die Oberfläche (10) des Kupplungsteiles (2) übergeht, wobei sich unter dem Federarm eine Vertiefung in Form einer Federarmnut (11) befindet, in Richtung auf den Anschlag (7) zeigt, wobei die erste Rippe (12) beim Einschieben des Kupplungsteiles (2) in die Stecknut (14) des Aggregatestutzens (15) in der Hinterschneidung (16) einrastet zur Verriegelung der Schlauchkupplung ; und daß
   - der Zusatzteil als Drehring (17, 22) ausgebildet ist, der wenigstens eine Rampe (18, 27) aufweist, die unter Verkleinerung des Innendurchmessers des Drehringes (17, 22) die zweite Rippe (13) und somit auch den Federarm (8) nach unten drückt, wodurch die erste Rippe (12) aus der Hinterschneidung (16) freikommt zur Entriegelung der Schlauchkupplung.

2. Schlauchkupplung nach Anspruch 1, dadurch gekennzeichnet, daß der Kupplungsteil (2) zwei Federarme (8) aufweist.

3. Schlauchkupplung nach Anspruch 2, dadurch gekennzeichnet, daß die Federarme gegenüberliegend angeordnet sind.

4. Schlauchkupplung nach einem der Ansprüche 1 bis 3, dadurch gekennzeichnet, daß der Grundkörper (1) und/oder der Drehing (17, 22) als Spritzgußteil aus Polyamide 6,6 GF 30 gefertigt sind.

5. Schlauchkupplung nach einem der Ansprüche 1 bis 4, dadurch gekennzeichnet, daß der Kupplungsteil (2) zwischen dem Federarmende (9) und dem Anschlag (7) eine Radialerhebung (20), von der mittig im rechten Winkel in Richtung des Federarmendes (9) eine Axialerhebung (21) verläuft, aufweist.

6. Schlauchkupplung nach Anspruch 5, dadurch gekennzeichnet, daß die Radialerhebung (20) wenigstens über die gesamte Federarmbreite, insbesondere über die volle Breite der Federarmnut (11) geht.

7. Schlauchkupplung nach einem der Ansprüche 1 bis 6, dadurch gekennzeichnet, daß der Drehing (22) außer der Rampe (27) eine Nut (23), eine Aussparung (24), eine Axial- und Radialnut (25 bzw. 26) sowie eine Zunge (28) aufweist.

8. Verwendung der Schlauchkupplung nach Anspruch 7, dadurch gekennzeichnet, daß diese bei der Erstmontage durch den Industrieroboter eine zusätzliche Verriegelung erfährt, die auf folgende Weise erfolgt:
    - der Drehring (22), der zunächst mit seinem durch die Nut (23) gebildeten, größten Innendurchmesser über den Federarm (8) hinweg bis zum Anschlag (7) gestülpt ist, wird so weit gedreht, bis sich die Rippe (13) des Federarmes (8) in der Aussparung (24) befindet, wobei gleichzeitig die Radial- und die Axialerhebung (20 bzw. 21) in die Radialnut (26) bzw. Axialnut (25) einrasten;
    - Der Drehring (22) wird nun in dieser Position vom Roboter gegriffen, wobei dieser unter Einwirkung einer Fügekraft über die Radialerhebung (20) hinweg schnappt und dann mit seiner unter den Federarm (8) fahrenden Zunge (28) den festen Sitz des Kupplungsteiles (2) im Stutzen (15) sichert, während sich seine Außenkante (29) an der Radialerhebung (20) abstützt.

9. Verwendung der Schlauchkupplung nach Anspruch 7, dadurch gekennzeichnet, daß diese bei der manuellen Neuverriegelung eine zusätzliche Verriegelung erfährt, die auf folgende Weise erfolgt:
    - der Drehring (22) ist zunächst so positioniert, daß sich sein durch Nutt (23) gebildeten größter Innendurchmesser über dem Federarm befindet;
    - nach dem Einrasten der Rippe (12) in die Hinterschneidung (16) des Stutzens (15) wird der Drehring (22) so bewegt, daß sich die Zunge (28) unter den Federarm (8) schiebt, und zwar bei gleichzeitiger Abstützung der Außenkante (29) an der Radialerhebung (20).

## Claims

1) A hose coupling, in particular for connections in the field of motor vehicles, consisting of:
    - a parent body (1) in the shape of a sleeve with a coupling part and a hose-connection part (2 resp. 3), the coupling part (2) exhibiting in the region at the front of it a circumferential groove (5) with an inserted sealing ring (6) of elastomeric material, in the region at the end of it a stop (7) and in the region between at least one elastically deformable spring arm (8) which is connected in one piece to the parent body (1);
    - an auxiliary part which encloses the coupling part (2) radially on the outside in the region of the spring arm (8); and
    - a unit connecting-piece (15) with a groove (14) for plugging in the coupling part (2); characterized in that
    - the free end (9) of the spring arm (8), which has two ribs (12, 13) directed outwards and continues at the same height without a step into the surface (10) of the coupling part (2), though there is a depression in the form of a spring arm groove (11) under the spring arm, points in the direction of the stop (7) so that upon pushing in the coupling part (2) to plug into the groove (14) in the unit connecting-piece (15) the first rib (12) snaps into the undercut (16) for locking the hose coupling; and that
    - the auxiliary part is made as a turnable ring (17, 22) which exhibits at least one ramp (18, 27) which by reducing the internal diameter of the turnable ring (17, 22) presses down the second rib (13) and hence also the spring arm (8), whereby the first rib (12) comes free from the undercut (16) for unlocking the hose coupling.

2. A hose coupling as in Claim 1, characterized in that the coupling part (2) exhibits two spring arms (8).

3. A hose coupling as in Claim 2, characterized in that the spring arms are arranged on opposite sides.

4. A hose coupling as in one of the Claims 1 to 3, characterized in that the parent body (1) and/or the turnable ring (17, 22) are manufactured as an injection-moulded part of polyamide 6.6 GF 30.

5. A hose coupling as in one of the Claims 1 to 4, characterized in that the coupling part (2) exhibits between the end (9) of the spring arm and the stop (7) a radial elevation (20) from the centre of which an axial elevation (21) runs at right angles in the direction of the end (9) of the spring arm.

6. A hose coupling as in Claim 5, characterized in that the radial elevation (20) runs across at least the whole width of the spring arm, in particular across the full width of the spring arm groove (11).

7. A hose coupling as in one of the Claims 1 to 6, characterized in that the turnable ring exhibits in addition to the ramp (27) a groove (23), a recess (24), an axial groove (25) and a radial groove (26) as well as a tongue (28).

8. Employment of the hose coupling as in Claim 7, characterized in that at green assembly by the industrial robot it experiences additional locking which is effected as follows:
    - the turnable ring (22) which first of all is inverted up against the stop (7) with its greatest internal diameter formed by the groove (23) over the spring arm (8), is turned until the rib (13) on the spring arm (8) is lying in the recess (24) whilst simultaneously the radial and axial elevations (20 resp. 21) snap respectively into the radial groove (26) and the axial groove (25);

- the turnable ring (22) is now gripped in this position by the robot, whereupon the latter under the influence of a jointing force snaps it over the radial elevation (20) and then by its tongue (28) running under the spring arm (8) ensures the firm seat of the coupling part (2) in the connecting-piece (15), whilst its outer edge (29) bears against the radial elevation (20).

9. Employment of the hose coupling as in Claim 7, characterized in that upon relocking by hand it experiences additional locking which is effected as follows:

- the turnable ring (22) is first of all so positioned that its greatest internal diameter formed by the groove 23 is lying over the spring arm;

- after snapping the rib (12) into the undercut (16) in the connecting-piece (15) the turnable ring (22) is moved so that the tongue (28) slides under the spring arm (8), that is, with the outer edge (29) bearing at the same time against the radial elevation (20).

**Revendications**

1.- Raccord de tuyau flexible, en particulier pour des jonctions dans le domine de l'automobile, se composant des éléments suivants:

- une pièce de base (1) en forme de douille comprenant une partie d'accouplement (2) et une partie (3) de jonction au tuyau flexible, la partie d'accouplement (2) présentant, dans sa région avant, une gorge circonférentielle (5) dans laquelle est reçu un anneau d'étanchéité (6) en matière élastomère, dans sa région intermédiaire, au moins un bras à ressort (8) déformable élastiquement, qui est formé d'un seul tenant avec la pièce de base (1), et, dans sa région terminale, une butée (7);

- un élément auxiliaire qui entoure la partie d'accouplement (2) dans la région du bras à ressort (8) du côté extérieur dans le sens radial; et

- une tubulure (15) d'un bloc, présentant une gorge d'emboîtement (14) pour la partie d'accouplement (2)

caractérisé en ce que

- l'extrémité libre (9) du bras à ressort (8) - qui comporte deux nervures (12, 13) dirigées vers l'extérieur et qui se fond au même niveau, sans gradin, dans la surface (10) de la partie d'accouplement (2), un évidement sous la forme d'une encoche (11) étant formé au-dessous du bras de ressort - fait face en direction de la butée (7), la première nervure (12) s'encliquetant dans une contre-dépouille (16) lors de l'insertion de la partie d'accouplement (2) dans la gorge d'emboîtement (14) de la tubulure (15) du bloc, afin de verrouiller le raccord de tuyau flexible; et

- l'élément auxiliaire est réalisé sous forme d'anneau tournant (17, 22) qui présente au moins une rampe (18, 27) qui, par diminution du diamètre intérieur de l'anneau tournant (17, 22), presse vers le bas la seconde nervure (13) et par suite aussi le bras à ressort (8), ce qui fait que la première nervure (12) est libérée de la contre-dépouille (16) pour le déverrouillage du raccord de tuyau flexible.

2.- Raccord de tuyau flexible selon la revendication 1, caractérisé en ce que la partie d'accouplement (2) présente deux bras à ressort (8).

3.- Raccord de tuyau flexible selon la revendication 2, caractérisé en ce que les bras à ressort sont disposés à l'opposé l'un de l'autre.

4.- Raccord de tuyau flexible selon l'une quelconque des revendications 1 à 3, caractérisé en ce que la pièce de base (1) et/ou l'anneau tournant (17, 22) sont fabriqués sous forme de pièces moulées par injection en polyamide 6,6 GF 30.

5.- Raccord de tuyau flexible selon l'une quelconque des revendications 1 à 4, caractérisé en ce que la partie d'accouplement (2) présente, entre l'extrémité (9) du bras à ressort et la butée (7), une surélévation radiale (20), à partir du milieu de laquelle une surélévation axiale (21) s'étend à angle droit en direction de l'extrémité (9) du bras à ressort.

6.- Raccord de tuyau flexible selon la revendication 5, caractérisé en ce que la surélévation radiale (20) s'étend au moins sur toute la largeur du bras à ressort, en particulier sur toute la largeur de l'interstice du bras à ressort (11).

7.- Raccord de tuyau flexible selon l'une quelconque des revendications 1 à 6, caractérisé en ce que l'anneau tournant (22) présente, outre la rampe (27), une rainure (23), un évidement (24), une rainure axiale (25) et une rainure radiale (26), ainsi qu'une languette (28).

8.- Utilisation du raccord de tuyau flexible selon la revendication 7, caractérisée en ce que celui-ci subit, lors de son premier montage par un robot industriel, un verrouillage supplémentaire qui s'effectue de la manière suivante:

- l'anneau tournant (22), qui est tout d'abord enfoncé, par son plus grand diamètre intérieur constitué par la rainure (23), par-dessus le bras à ressort (8) jusqu'à la butée (7), est tourné jusqu'à ce que la nervure (13) du bras à ressort (8) se trouve dans l'évidement (24), la surélévation radiale (20) et la surélévation axiale (21) se traouvant en même temps dans la rainure radiale (26) et dans la rainure axiale (25) respectivement;

- l'anneau tournant (22) est alors saisi dans cette position par le robot et, sous l'action d'une force d'assemblage, il passe par-dessus la surélévation radiale (20) en faisant ressort, puis assure l'ajustement fixe de la partie d'accouplement (2) dans la tubulure (15) par sa languette (28) qui s'engage au-dessous du bras à ressort (8), tandis qu'il prend appui par son bord extérieur (29) sur la surélévation radiale (20).

9.- Utilisation du raccord de tuyau flexible selon la revendication 7, caractérisée en ce que celui-ci subit, lors du reverrouillage manuel, un verrouillage supplémentaire qui s'effectue de la manière suivante:

- l'anneau tournant (22) est d'abord positionné de sorte que son plus grand diamètre intérieur, constitué par la rainure (23), se trouve sur le bras à ressort;
- après l'encliquetage de la nervure (12) dans la contre-dépouille (16) de la tubulure (15), l'anneau tournant (22) est déplacé de sorte que la languette (28) glisse sous le bras à ressort (8), et cela tandis que le bord extérieur (29) prend en même temps appui sur la surélévation radiale (20).

**FIG.1**

**FIG.2**

FIG.3

Schnitt A - A

FIG.4

22  24

26

27

26

23

A — 25

D

D

A

B — B

B

C

C

**FIG.5**

22  26

28

25

*Schnitt A - A*

**FIG.6**

*Schnitt B - B*

*Schnitt D - D*

**FIG.7**

26

*Schnitt C - C*

26

**FIG.8**

**FIG.9**

EP 0 367 136 B1

6

FIG.10

FIG.11